# EUROPÄISCHE PATENTSCHRIFT

(11) **EP 1 448 927 B1**
(45) Veröffentlichungstag und Bekanntmachung des Hinweises auf die Patenterteilung: **17.08.2005**
(21) Anmeldenummer: 02787739.8
(22) Anmeldetag: 20.11.2002
(51) Int. Cl.: F16L 37/092

(54) **STECKKUPPLUNG**
PLUG-IN CONNECTOR
RACCORD ENFICHABLE

(30) Priorität: 28.11.2001 DE 10158208; 17.04.2002 DE 10217127; 17.05.2002 DE 10221971
(43) Veröffentlichungstag der Anmeldung: 25.08.2004
(73) Patentinhaber: Friatec Aktiengesellschaft, 68229 Mannheim (DE)
(72) Erfinder: BAVING, Hans-Jürgen, 68165 Mannheim (DE); MANNWEILER, Gudrun, 68219 Mannheim (DE); MILNAZIK, Peer, 67061 Ludwigshafen (DE); SCHIEDHERING, Lars, 74889 Sinsheim (DE); ZELLER, Henrik, 68766 Hockenheim (DE)
(74) Vertreter: Schmitt, Meinrad, Dipl.-Ing.
(86) Internationale Anmeldenummer: PCT/EP2002/013002
(87) Internationale Veröffentlichungsnummer: WO 2003/046429

(56) Entgegenhaltungen:
- WO-A-00/75554
- DE-A- 19 945 721
- NL-A- 301 633
- US-A- 4 915 249

## Beschreibung

Die Erfindung bezieht sich auf eine Steckkupplung gemäß der im Oberbegriff des Patentanspruchs 1 angegebenen Merkmale.

Aus der PCT-Patentanmeldung WO 00/75 554 A 1 ist eine derartige Steckkupplung bekannt, welche als Doppelmuffe ausgebildet ist und einen Grundkörper sowie eine Halte- oder Klemmvorrichtung jeweils für die beiden in die Steckkupplung einsteckbaren Enden der miteinander zu verbindenden Rohre enthält. Die Halteeinrichtung enthält einen Klemmring, welcher radial außen einen Klemmkonus und innen zumindest eine Klemmrippe aufweist, welche mit dem jeweiligen Rohrende in Eingriff bringbar ist. Jeder Klemmring ist außen von einer Hülse umgeben, welche radial innen einen Gegenkonus zur Verspannung des genannten Klemmringes enthält. Der Grundkörper enthält nahe eines vorderen Endbereiches eine Ringnut mit einem ringförmigen Dichtelement, welches an der Innenfläche des eingeschobenen Rohrendes dichtend anliegt. Der vordere Endbereich des Grundkörpers und ebenso das vordere Ende der genannten Hülsen sind in einem geringen Abstand zur Ringnut angeordnet. Wird das Rohrende nicht koaxial zur Längsachse der Steckkupplung in den Ringspalt zwischen dem Grundkörper und der Hülse eingesteckt, sondem in einem mehr oder weniger großen Winkel zur Längsachse der Steckkupplung, so besteht die Gefahr, dass das Dichtelement zumindest teilweise aus der Ringnut herausgedrückt wird oder beschädigt wird, so dass die erforderliche dichte Verbindung nicht mit der erforderlichen Funktionssicherheit hergestellt und / oder gewährleistet werden kann.

Hiervon ausgehend liegt der Erfindung die Aufgabe zugrunde, die Steckkupplung der genannten Art dahingehend weiterzubilden, dass mit geringem Aufwand und hoher Funktionssicherheit die Verbindung mit dem wenigstens einen Rohrende durchführbar ist. Die Steckkupplung soll bei der Montage eine funktionsgerechte Handhabung ermöglichen und die Gefahr von Montagefehlern soll ausgeschlossen werden. Die Steckkupplung und / oder das Dichtelement sollen einen geringen Materialeinsatz und ein geringes Bauvolumen erfordern. Die Steckkupplung soll für Rohre aus unterschiedlichen Werkstoffen, wie Kunststoff oder Metall oder einem Verbund derselben (Verbundrohre aus Kunststoff mit einer Metall-Zwischenschicht), gleichermaßen einsetzbar sein, wie für Rohre aus vergleichsweise weichen Werkstoffen, wie insbesondere Polyäthylen, und über viele Jahre soll dauerhaft eine sichere Verbindung gewährleistet werden. Des weiteren soll die Steckkupplung im Sanitärbereich, insbesondere für die Warmwasser- und Kaltwasserinstallation zum Einsatz gelangen können, wobei vor allem durch Temperaturänderungen des strömenden Mediums bedingte Materialveränderungen, insbesondere hinsichtlich der Dimension oder der Steifigkeit, zuverlässig von der Steckkupplung aufgenommen werden sollen.

Die Lösung dieser Aufgabe erfolgt gemäß der im Patentanspruch 1 angegebenen Merkmale.

Die erfindungsgemäße Steckkupplung zeichnet sich durch eine funktionssichere Konstruktion und einen geringen Fertigungs- und Montageaufwand aus. Der teilweise in das Innere des Rohrendes eingreifende Grundkörper gewährleistet eine sichere radiale Abstützung des Rohrendes, so dass auch unter wechselnden Betriebsbedingungen eine sichere Aufnahme und Übertragung der Klemmkräfte der Haltemittel sowie eine sichere Abdichtung gewährleistet ist. Mit dem Grundkörper ist eine Hülse gekoppelt, welche nachfolgend auch als Ringkörper oder Haube bezeichnet wird und welche das Rohrende radial außen umgibt, wobei das Rohrende in einem Ringraum zwischen dem Grundkörper und der genannten Hülse festgeklemmt ist. Die Hülse bzw. der Ringkörper enthält eine bevorzugt konische Innenfläche, wobei zwischen dieser und der Außenfläche des Rohrendes der Klemmring angeordnet ist, welcher kraft- und / oder formschlüssig beidseitig sowohl mit der Innenfläche des Ringkörpers als auch mit der Außenfläche des Rohrendes in Eingriff steht. Das Dichtelement ist vorteilhaft auf dem in das Rohrende eingreifenden Teil des Grundkörpers angeordnet und liegt an der Innenfläche des Rohrendes dichtend an.

Der Dichtring enthält in bevorzugter Weise zwei radial außen liegende Dichtwülste, welche sich jeweils nach Art eines O-Ringes ausgebildet sind und / oder sich wie O-Ringe verhalten. Die Dichtwülste sind Bestandteile von Dichtbereichen, welche in einer axialen Schnittebene eine zumindest teilweise und / oder zumindest näherungsweise kreisförmige Querschnittsfläche aufweisen. Bevorzugt liegt wenigstens einer der beiden Dichtwülste auf einem Kreis, dessen Durchmesser zumindest näherungsweise gleich groß ist wie die radiale Dicke des Dichtbereiches. Die Dichtwülste und / oder die zumindest näherungsweise als O-Ringe ausgebildeten Dichtbereiche sind einteilig in das Dichtelement integriert, wobei ein axialer Verbindungsteil mit einer vergleichsweise geringen radialen Dicke vorgesehen ist. Bei Steckkupplungen für vergleichsweise kleine Durchmesser der Rohre bzw Nennweiten, insbesondere d16 bis d25, weist der in Einschubrichtung vordere erste Dichtwulst zweckmäßig einen um einen vorgegebenen Betrag kleineren Außendurchmesser auf als der in Einschubrichtung nachfolgende zweite Dichtwulst. Für größere Durchmesser bzw. Nennweiten, insbesondere ab d32, weist hingegen der vordere erste Dichtwulst bevorzugt einen größeren Außendurchmesser als der zweite Dichtwulst auf. In axialen Schnittebenen liegen die genannten Dichtwülste zumindest näherungsweise auf kreisförmigen Querschnittsflächen, deren Radius derart vorgegeben ist, dass sie die Innenfläche des Dichtringes zumindest näherungsweise tangieren. Mit anderen Worten, der Dichtring enthält zwei Dichtbereiche, welche zumindest näherungsweise als O-Ringe ausgebildet sind und welche über den Verbindungsteil einteilig miteinander verbunden sind. Dieser Verbindungsteil weist radial außen einen kleineren Außendurchmesser als die genannten Dichtwülste auf, wobei ein zwischen den Dichtwülsten liegender Verformungsraum geschaffen ist, welcher, insbesondere bei engen Rohrtoleranzen die Verformung der Dichtwülste aufnimmt, um die Verpressung unter dem kritischen Wert zu halten.

Radial innenliegend weist das Dichtelement eine Ringnut auf, um das Herausrutschen aus der Ringnut des Grundkörpers zu verhindern, welcher ein in die Ringnut des Dichtelements eingreifendes und mit dieser korrespondierendes, bevorzugt ringförmiges Sicherungselement oder Haltekörper aufweist. Als weitere Sicherung gegen ein Herausrutschen des Dichtelements aus der Ringnut des Grundkörpers weist das Dichtelement an seinem einen Ende ferner einen Anschlag auf, welcher bei einer Druckbeaufschlagung an der Ring- oder Dichtnut des Grundkörpers anliegt. Der Klemmring weist in bevorzugter Weise sowohl radial innen als auch radial außen jeweils eine Haltekralle auf, welche in die Außenfläche des Rohrendes bzw. in die Innenfläche des genannten Ringkörpers eingepresst wird, wodurch eine hohe Funktionssicherheit für die axiale Fixierung des Rohrendes bezüglich der Steckkupplung sicher gestellt ist.

Am vorderen freien Ende enthält die Hülse eine Verlängerung mit einem innenliegenden Führungsbereich, welcher eine vorgegebene axiale Länge aufweist. Aufgrund der Verlängerung bzw. des Führungsbereiches wird das Rohrende beim Einstecken in die Steckkupplung im wesentlichen koaxial zu der Längsachse ausgerichtet. Die Winkelstellung des Rohres bzw. des Rohrendes beim Einstecken in die Steckkupplung wird somit auf ein Minimum reduziert und das Dichtelement folglich nur durch axiale Kräfte beaufschlagt. Eine Schrägstellung des Rohrendes beim Einstecken in die Kupplung wird weitestgehend ausgeschlossen, und damit wird die Gefahr des Herausdrückens oder Abquetschens des Dichtelements mit hoher Funktionssicherheit und bei einfacher Handhabung vermieden. Zusätzlich oder alternativ kann im Rahmen der Erfindung auch der Grundkörper am vorderen Ende vor dem Dichtelement eine Verlängerung mit einem Führungsbereich zur Zentrierung des Rohrendes beim Einstecken aufweisen. Der Grundkörper enthält insbesondere an einem radial nach außen gerichteten Steg eine Stirn- oder Anlagefläche, an welcher die Stirnfläche des in die Steckkupplung eingeschobenen Rohrendes nach dem vollständigen Einschieben zur Anlage gelangt. Die das Dichtelement aufnehmende Ringnut und insbesondere deren vordere Endfläche weist zu der genannten Stirn- oder Anlagefläche einen vergleichsweise großen Abstand auf. Dieser Abstand ist zumindest näherungsweise gleich groß oder größer als der Innendurchmesser der Hülse und / oder des Führungsbereiches, wobei der Innendurchmesser im wesentlichen gleich groß ist wie der Außendurchmesser des genannten Rohrendes. Ferner ist bei der erfindungsgemäßen Steckkupplung der Klemmring axial zwischen dem Bereich der Ringnut mit dem Dichtelement und der genannten Stirn- oder Anlagefläche angeordnet. Des weiteren ist in einer besonderen Ausgestaltung der Erfindung die vom freien Ende des Grundkörpers entfernt angeordnete Wand der das Dichtelement aufnehmenden Ringnut als Hinterschneidung ausgebildet, in welche das Dichtelement beim Einschieben des Rohrendes eingeklemmt wird. Somit wird vermieden, dass beim Einschieben des Rohrendes das Dichtelement aus der Ringnut herausgedrückt wird.

Es sei an dieser Stelle ausdrücklich festgehalten, dass die erfindungsgemäße Steckkupplung Bestandteil eines Fittings zur Verbindung von zwei oder mehreren Rohren, beispielsweise in Form eines Winkels, eines T-Stückes oder einer Doppelmuffe mit koaxialer Ausrichtung der Kupplungsteile sein kann. Des weiteren kann die Steckkupplung Bestandteil eines Fittings oder eines Gehäuses einer Armatur zum Anschluss eines einziges Rohrendes sein oder Bestandteil eines Übergangstückes zwischen Rohren aus unterschiedlichen Werkstoffen oder dergleichen. Bei Ausbildung als Fitting oder Doppelmuffe zum Verbinden von zwei oder mehr Rohren, können deren Achsen beliebige Winkelstellungen zueinander aufweisen. Auch sei festgehalten, dass die Steckkupplung insbesondere für Rohre aus unterschiedlichen Werkstoffen und / oder mit unterschiedlichen Materialeigenschaften zum Einsatz gelangen kann.

Besondere Ausgestaltungen und Weiterbildungen der Erfindung sind in den Unteransprüchen sowie der weiteren Beschreibung angegeben.

Die Erfindung wird nachfolgend besonderer, in der Zeichnung dargestellter Ausführungsbeispiele näher erläutert, ohne dass insoweit eine Beschränkung erfolgt. Es zeigen:
- Fig. 1: einen axialen Längsschnitt der Steckkupplung zur Verbindung von zwei Rohrenden,
- Fig. 2: einen axialen Längsschnitt des einen Teils der Steckkupplung, wobei nur ein Teil des Grundkörpers und die mit diesem verbundene Hülse dargestellt sind,
- Fig. 3: teilweise einen axialen Längsschnitt des verlängerten Grundkörpers,
- Fig. 4: vergrößert und teilweise einen Schnitt durch das Dichtelement in einer axialen Schnittebene,
- Fig. 5: einen axialen Längsschnitt des Grundkörpers in einer besonderen Ausgestaltung,
- Fig. 6: eine besondere Ausbildung des Rohrendes.

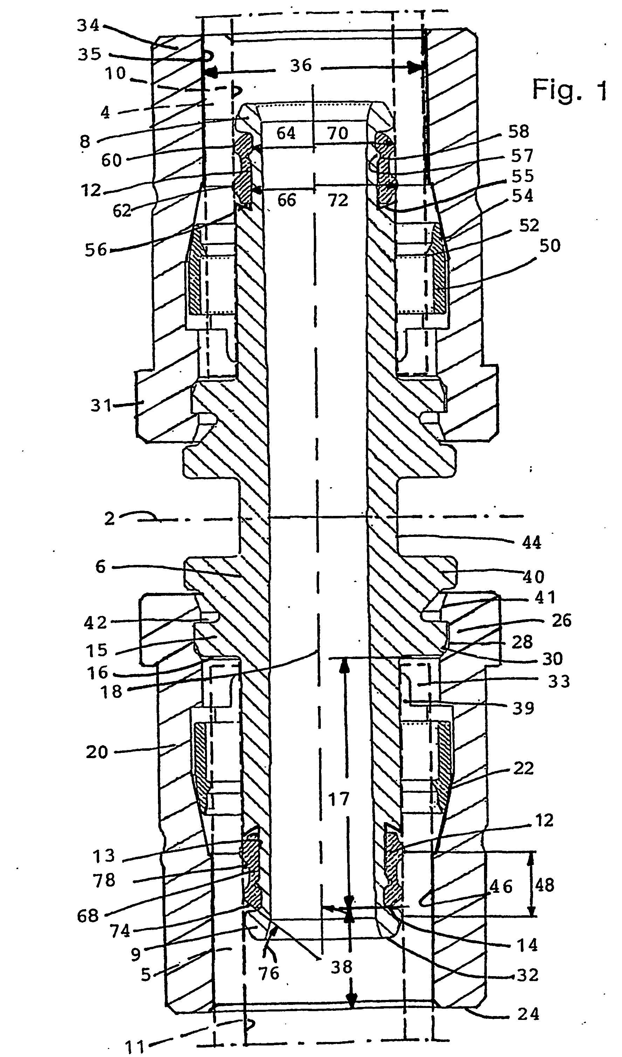

Die Steckkupplung gemäß Fig. 1 ist symmetrisch zur Mittelebene 2 als Doppelmuffe ausgebildet und dient zur Verbindung von zwei schematisch angedeuteten Rohrenden 4, 5. Diese Doppelmuffe enthält somit zwei links- bzw. rechts der Mittelebene 2 liegende Teile, welche jeweils für sich die erfindungsgemäße Steckmuffe bilden. Die nachfolgenden Erläuterungen gelten in entsprechender Weise jeweils für die beiden zueinander symmetrischen Teile der dargestellten Doppelmuffe. Die Doppelmuffe bzw. die Steckkupplung enthält einen Grundkörper 6, welcher teilweise jeweils in die beiden Rohrenden 4, 5 eingeschoben ist, wobei die Endbereiche 8, 9 des Grundkörpers 6 bevorzugt als konische Erweiterungen ausgebildet sind, welche von den freien Enden des Grundkörpers 6 radial nach außen in Richtung auf die Innenflächen 10, 11 des jeweiligen Rohrendes 4, 5 verlaufen. An der jeweiligen Innenfläche 10, 11 liegt ein Dichtelement 12 dichtend an, welches in einer Ringnut 13 der Außenfläche des Grundkörpers 6 angeordnet ist.

Die Ringnut 13 weist eine dem vorderen Endbereich 8, 9 des Grundkörpers 6 nächst liegende vordere Endfläche 14 auf. Der Grundkörper 6 enthält ferner einen ersten radial nach außen gerichteten Steg oder Bund 15 mit einer vorderen Stirn- oder Anlagefläche 16 als Anschlag für die Stirnfläche des in die Steckkupplung eingeschobenen Rohrendes 4, 5. Der Steg oder Bund 15 ist bevorzugt bezogen auf die Längsachse 18, als ein umlaufender geschlossener Ring ausgebildet, doch kann der Steg 15 gleichermaßen in eine Anzahl von Segmenten unterteilt sein. Die vordere Endfläche 14 ist in einem Abstand 17 zur Stirnfläche 16 des Steges oder Bundes 15 angeordnet.

Ferner ist eine Hülse oder ein Ringkörper 20 vorgesehen, welcher das jeweilige Rohrende 4, 5 außen umgibt. Der Ringkörper 20 enthält innen eine bevorzugt konisch ausgebildete Klemmfläche 22, deren Innendurchmesser zum freien Ende 24 des jeweiligen Ringkörpers 20 abnimmt. Die Haube bzw. der Ringkörper 20 enthält ferner ein Verbindungselement 26, welches mit dem ersten Steg 15 in Eingriff steht. Der Steg 15 besitzt somit eine Doppelfunktion, nämlich Anschlag für das Rohrende und Befestigung des Ringkörpers 20. In zweckmäßiger Weise enthält das Verbindungselement 26 innen eine Ringnut 28, in welche der erste Steg 15 mit seinem radial außenliegenden Rand 30 eingreift. Der Ringkörper 20, insbesondere dessen Verbindungselement 26, übergreift in axialer Richtung, und zwar weg vom freien Ende 32 die Stirnfläche des eingeschobenen Rohrendes und ferner insbesondere ringförmig den Außenrand des ersten Stegs 15. Zumindest das Verbindungselement 26 ist derart federelastisch deformierbar, dass es zur Montage über den Außenrand 30 des ersten Stegs 15 hinweggeschoben werden kann, um die in der Zeichnung dargestellte arretierte Position bezüglich des Grundkörpers 6 einzunehmen. Die Hülse bzw. der Ringkörper 20 weist im Bereich des Verbindungselements 26 radial außen einen vergrößerten Außendurchmesser bzw. eine radiale Erweiterung 31 auf. Hierdurch wird eine vergrößerte mechanische Belastbarkeit gewährleistet, und die Gefahr des Ablösens oder Heruntersprengens der Hülse vom ersten Steg 15, welcher als Bund ausgebildet ist, des Grundkörpers wird verringert. Diese radiale Erweiterung 31 bildet eine Verstärkung des hinteren Bereiches der Hülse 20. In besonders vorteilhafter Weise erfolgt die Montage bzw. die Herstellung der Verbindung des Ringkörpers 20 mit dem Grundkörper 6 werksseitig, so dass vor dem Einschieben des Rohrendes zwischen dem radial innenliegenden Grund körper 6 und dem außenliegenden Ringkörper 20 ein Ringspalt 33 vorhanden ist, in welchen beim Herstellen der Verbindung der Steckkupplung mit dem Rohrende 4, 5 dieses axial einschiebbar ist.

Die Hülse 20 besitzt eine über den Endbereich 8 des Grundkörpers 6 hinausragende Verlängerung 34 mit einem innenliegenden, bevorzugt zylindrischen Führungsbereich 35, welcher einen Innendurchmesser 36 aufweist. Der Innendurchmesser 36 ist im wesentlichen gleich groß wie der Außendurchmesser des eingeschobenen Rohrendes 4, 5. Das vordere Ende 24 der Verlängerung 34 und somit der Hülse 20 ist in einem vorgegebenen Abstand 38 zur vorderen Endfläche 14 der Ringnut 13 mit dem Dichtelement 12 angeordnet. Bezogen auf die vordere Endfläche 14 der Ringnut 13 weist somit die Verlängerung 34 bzw. deren innenliegender Führungsbereich 35 eine axiale Länge 38 auf. Die Größe der Länge 38 liegt erfindungsgemäß im Bereich zwischen 30 bis 60 %, bevorzugt zwischen 40 bis 50 %, des Innendurchmessers 36. Somit wird in bevorzugter Weise eine koaxiale Ausrichtung und Führung des Rohrendes beim Einführen in die Steckkupplung gewährleistet. Die axiale Länge 38 ist im Rahmen der Erfindung maximal derart vorgegeben, dass ein geringer Materialeinsatz und ein geringes Bauvolumen gewährleistet werden, wobei gleichwohl eine optimierte koaxiale Führung und Ausrichtung des Rohrendes gewährleistet ist.

In der dargestellten Ausführungsform ist der Ringkörper 20 mittels der Verbindungselemente 26 dauerhaft und nicht lösbar mit dem Grundkörper 6 verbunden. Alternativ kann im Rahmen der Erfindung die Verbindung auch lösbar ausgebildet sein, wobei das oder die Verbindungselemente insbesondere jeweils ein Innengewinde aufweisen, welches mit einem korrespondierenden Außengewinde des Grundkörpers in Eingriff ist. Des weiteren können im Rahmen der Erfindung auch andere Verbindungen des Ringkörpers mit dem Grundkörper, wie beispielsweise nach Art eines Bajonettverschlusses, vorgesehen sein.

Der Ringkörper 20 enthält zumindest im Bereich des Steges 16 bzw. des Anschlags für das Rohrende 4, 5 ein Sichtfenster 39 und / oder einen transparenten Bereich derart, dass die radial innenliegende Stirnfläche bzw. der daran anschließende Teil des Rohrendes 4, 5 von außen sichtbar ist. Somit ist eine optische Sichtkontrolle geschaffen, so dass ein unvollständiges Einschieben des Rohrendes 4, 5 bei der Montage oder später gegebenenfalls ein teilweises Herauslösen des Rohrendes ohne weiteres erkannt werden kann. Zweckmäßig ist über den Umfang des Ringkörpers 20 verteilt eine Anzahl derartiger Sichtfenster, insbesondere in Form von radialen Durchbrechungen oder Öffnungen, oder eine Anzahl transparenter Bereiche vorgesehen, so dass eine optische Kontrolle von jeder Seite der Steckkupplung problemlos durchführbar ist. In einer alternativen Ausgestaltung ist der komplette Ringkörper 20 aus transparentem Material, und zwar insbesondere aus Kunststoff gefertigt. Das Sichtfenster 39 bzw. der transparente Bereich ist erfindungsgemäß außerhalb des mittels des Dichtelements abgedichteten Innenbereiches der Steckkupplung vorgesehen. Axial an das oder die Sichtfenster bzw. transparente Bereiche 39 anschließend, und zwar weg vom freien Ende 32 des Grundkörpers 6, sind das oder die Verbindungselemente 26 des Ringkörpers 20 mit dem Grundkörper 6 vorgesehen. Der Grundkörper 6 besitzt ferner einen zweiten Steg 40, axial beabstandet vom ersten Steg 15 derart, dass der Ringkörper 20 mit einem hakenförmigen, radial nach innen gerichteten Ansatz 41 in den Ringraum 42 zwischen den axial beabstandet angeordneten Stegen 15, 40 zur Arretierung des Ringkörpers 20 auf dem Grundkörper 6 eingreift. Der zweite radiale Steg 40 dient als Aufschubbegrenzung für den Ringkörper 20 bei der Montage auf dem Grundkörper 6. Bei der hier gezeigten Ausführungsform als Doppelmuffe ist zwischen den beiden axial beabstandeten zweiten Stegen 40 eine Ringnut 44 des Grundkörpers 6 vorhanden. Diese Ringnut 44 kann als Angreifmittel, beispielsweise als Sechskant, für ein Werkzeug beim Herstellen der Verbindung mit dem Ringkörper 20 und / oder dem Rohrende 4, 5 genutzt werden.

Wie aus der Zeichnung ersichtlich, enthält der Ringkörper 20 anschließend an die Verlängerung 34 in Richtung zur Mittelebene 2 einen Bereich 46 mit vorgegebener axialer Länge 48, wobei innerhalb dieses Bereiches 46 im wesentlichen, zumindest aber teilweise das Dichtelement 12 angeordnet ist. Mit dem genannten Bereich 46 sowie dem Verlängerungsbereich 34 liegt der Ringkörper 20 zumindest näherungsweise an der Außenfläche des jeweiligen eingeschobenen Rohrendes 4, 5 an. Die Innenfläche des Ringkörpers 20 ist in dem genannten Bereich 46 bevorzugt zylindrisch ausgebildet und gewährleistet somit eine sichere radiale Abstützung des eingeschobenen Rohrendes und folglich eine sichere Abdichtung mittels des radial innen liegenden Dichtelements 12.

Axial an den zylindrischen Bereich 46 des Ringkörpers 20 schließt die oben erwähnte, bevorzugt konische Klemmfläche 22 für den Klemmring 50 an. Der Klemmring 50 enthält wenigstens eine erste innere Haltekralle 52, welche insbesondere ringförmig ausgebildet ist und in die Außenfläche des Rohrendes 4, 5 eingepresst ist. Erfindungsgemäß ist der Klemmring 50 axial zwischen dem Steg 15 bzw. dessen vorderer Stirnfläche 16 und der das Dichtelement 12 aufnehmenden Ringnut 13 angeordnet. Es ist somit eine klare Funktionstrennung des Bereiches mit dem Klemmring 50 und des dem Dichtelement zugeordneten Bereiches vorgegeben, so dass die Dimensionierung einerseits für das Festklemmen und andererseits für das Abdichten des eingeschobenen Rohrendes unabhängig voneinander vorgegeben werden kann, was insbesondere für Rohre aus vergleichsweise weichen Werkstoffen von Bedeutung ist. In vorteilhafter Weise besitzt der Klemmring 50 ferner wenigstens eine radial außenliegende zweite Haltekralle 54, welche in die Klemmfläche 22 des Ringkörpers 20 eingepresst ist. Die bevorzugt ringförmige Haltekralle bzw. Haltekrallen 52, 54 gewährleisten aufgrund des im wesentlichen linienförmigen Eingreifens in die Außenfläche des Rohrendes 4, 5 und / oder in die innere Klemmfläche 22 des Ringkörpers 20 eine hohe Flächenpressung und letztendlich eine sichere Arretierung gegen axiale Auszugskräfte des Rohrendes 4, 5 aus der Steckkupplung. Wie aus der Zeichnung ersichtlich, ist bei der erfindungsgemäßen Steckkupplung der Klemmring 50 axial zwischen der Ringnut 14 mit dem Dichtelement 12 und dem ersten Steg 15 bzw. dem Ende des Ringspaltes 33 angeordnet. Der Klemmring 50 liegt somit axial beabstandet zu dem Dichtbereich mit dem ringförmigen Dichtelement 12, so dass die Klemmkräfte einerseits und die Dichtkräfte andererseits unabhängig voneinander dimensioniert und vorgegeben werden können, durch entsprechende Dimensionierung des dem Klemmring 50 zugeordneten Bereiches des Ringkörpers 20 und des Grundkörpers einerseits und des Dichtbereiches mit dem Dichtelement 12 andererseits. Erfindungsgemäß ist im Bereich des Klemmringes 50 radial innen ein bevorzugt zylindrischer Bereich des Grundkörpers 6 vorhanden, so dass die Klemmkräfte funktionssicher von dem radial innenliegenden Bereich des Grundkörpers 6 aufgenommen werden.

In einer bevorzugten Ausgestaltung ist die dem vorderen Endbereich 8, 9 des Grundkörpers 6 entfernt liegende hintere Endfläche 55 der Ringnut 13 zur Längsachse 18 derart schräg zur Längsachse 18 angeordnet, dass eine Hinterschneidung 56 gebildet ist. Beim Einstecken des Rohrendes in die Steckkupplung wird somit das Dichtelement 12 in diese Hinterschneidung 56 hineingedrückt, so dass das Dichtelement 12 mit hoher Funktionssicherheit in der Ringnut 13 gehalten wird und ein Herausdrücken oder Abquetschen des Dichtelements 12 vermieden wird. Ferner enthält die Ringnut 13 einen radial nach außen gerichteten, bevorzugt ringförmigen Haltekörper 57, welcher in eine korrespondierende Ringnut 58 in der Innenfläche des Dichtelements 12 eingreift. Somit wird eine axiale Festlegung des Dichtelements 12 und eine Sicherung gegen ein Herausrutschen aus der Ringnut 13 des Grundkörpers 6 erreicht.

Radial außen weist das Dichtelement 12 einen ersten Dichtwulst 60, welcher benachbart zum Endbereich 8 angeordnet ist, und ferner einen zweiten Dichtwulst 62 auf, so dass eine zweifache Abdichtung und eine hohe Funktionssicherheit für eine lange Lebensdauer von vielen Jahren und Jahrzehnten gewährleistet ist. Im Bereich des ersten Dichtwulstes 60 besitzt die bevorzugt zylindrische Innenfläche des Dichtelements 12 einen Innenradius 64, während im Bereich des zweiten Dichtwulstes 62 die Innenfläche des Dichtelements 12 auf einem Innenradius 66 liegt. Die Innenradien 64, 66 stimmen im wesentlichen mit den Radien der zugeordneten Bodenflächen der Ringnut 13 überein. Die Dichtbereiche der Dichtwülste sind mittels eines axialen Verbindungsteils 68 einstückig miteinander verbunden. Ferner besitzt der erste Dichtwulst 60 einen Außenradius 70 und der zweite Dichtwulst 62 einen Außenradius 72. Die Dichtgeometrie des Dichtelements 12 mit den beiden ringförmigen Dichtwülsten 60, 62 ist derart vorgegeben, dass diese sich wie zwei O-Ringe verhalten. Wie eingangs bereits erläutert, ist bei der dargestellten Steckkupplung, welche für vergleichsweise kleine Nennweiten vorgesehen ist, der Außenradius 70 des ersten Dichtwulstes 60 um einen vorgegeben Betrag kleiner als der Außenradius 72 des zweiten Dichtwulstes 62. In bevorzugter Weise besitzt das Dichtelement 12 in Richtung zum Endbereich 8, 9 bzw. zum freien Ende 32 des Grundkörpers 6 eine Schrägfläche 74. Die im wesentlichen konische Schrägfläche 74 schließt zur Längsachse 18 einen Konuswinkel 76 ein, welcher sich in Richtung weg vom Endbereich 8, 9 öffnet und bevorzugt eine Größe im Bereich von 40 bis 50° aufweist. Aufgrund der Schrägfläche 74 wird in vorteilhafter Weise eine Reduzierung der Einschubkräfte beim Einschieben des Rohrendes 4, 5 in die Steckkupplung erreicht. Axial zwischen den beiden Dichtwülsten 60 und 62 ist ein Verformungsraum 78 vorhanden, welcher insbesondere bei engen Rohrtoleranzen die Verformung der beiden Dichtwülste 60, 62 aufnimmt, so dass die Verpressung der Dichtwülste funktionssicher ermöglicht wird und / oder unter einem kritischen Wert bleibt. Der Verbindungsteil 68 des Dichtelements 12 zwischen den beiden Dichtwülsten 60, 62 ist radial außen von dem ringförmigen Verformungsraum 78 umgeben ist. Die Dichtbereiche mit den Dichtwülsten 60, 62 und der Verbindungsteil 68 sind integrale Bestandteile des einstückig ausgebildeten Dichtelements 12.

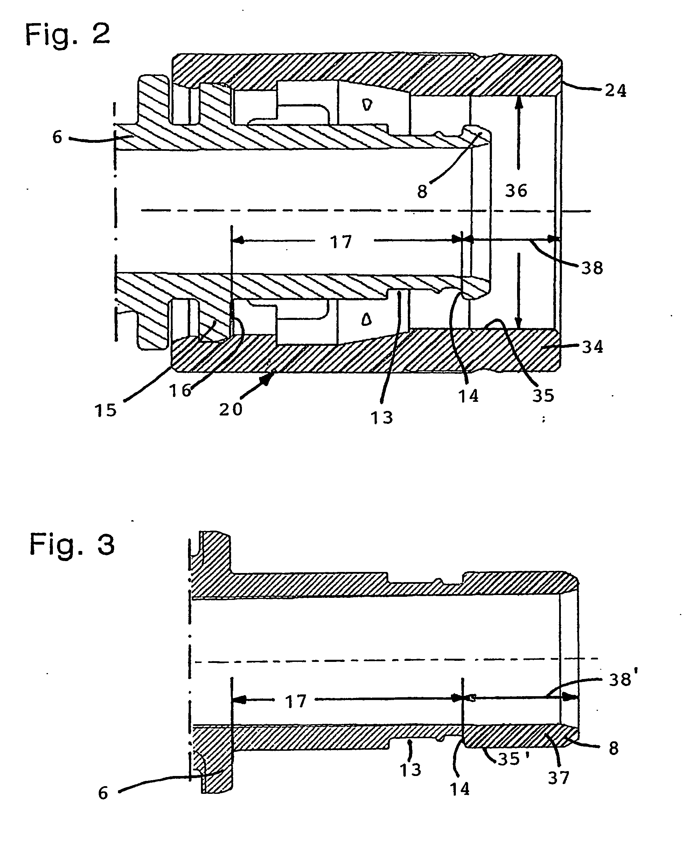

Fig. 2 zeigt die Hülse 20, deren Verlängerung 34 über den vorderen Endbereich 8 des Grundkörpers 6 hinausragt. Das vordere Ende 24 der Hülse 20 besitzt zur vorderen Endfläche 14 der Ringnut 13 des Grundkörpers 6 einen vorgegebenen Abstand mit der Länge 38. Erfindungsgemäß ist die Länge 38 im Bereich zwischen 30 bis 60 % des Innendurchmessers 36 der Hülse 20 bzw. der Verlängerung 34 vorgegeben. Des weiteren sei festgehalten, dass die vordere Endfläche 14 der Ringnut 13 zur Stirn- oder Anlagefläche 16 des ersten Stegs 15 im Abstand 17 angeordnet ist. Die Größe des Abstandes 17 liegt im Bereich zwischen 50 bis 130 %, vorzugsweise zwischen 60 bis 120 %, insbesondere zwischen 70 bis 110 %, des Innendurchmessers 36.

Fig. 3 zeigt eine bevorzugte Ausgestaltung des Grundkörpers 6 mit einer Verlängerung 37. Ein derart verlängerter Grundkörper 6 kann zusätzlich oder altemativ zu der oben erläuterten verlängerten Hülse vorgesehen sein. Das vordere Ende 8 des derart verlängerten Grundkörpers 6 weist zur vorderen Endfläche 14 der Ringnut 13 einen vorgegebenen Abstand mit der Länge 38' auf. Die Verlängerung 37 enthält einen radial außenliegenden Führungsbereich 35' zur Zentrierung bzw. koaxialen Ausrichtung des in die Steckmuffe einzuschiebenden Rohrendes. Die Größe der Länge 38' liegt im Bereich zwischen 30 bis 60 %, bevorzugt zwischen 40 bis 50 %, des oben genannten Innendurchmessers der Hülse des Verlängerungsbereiches. Des weiteren liegt im Rahmen der Erfindung die Größe der axialen Länge 38' im Bereich zwischen 30 bis 60 %, bevorzugt zwischen 40 bis 50 %, des Abstandes 17 der vorderen Endfläche 14 der Ringnut 13 zur vorderen Anlage- bzw. Stirnfläche 16 des ersten Stegs 15.

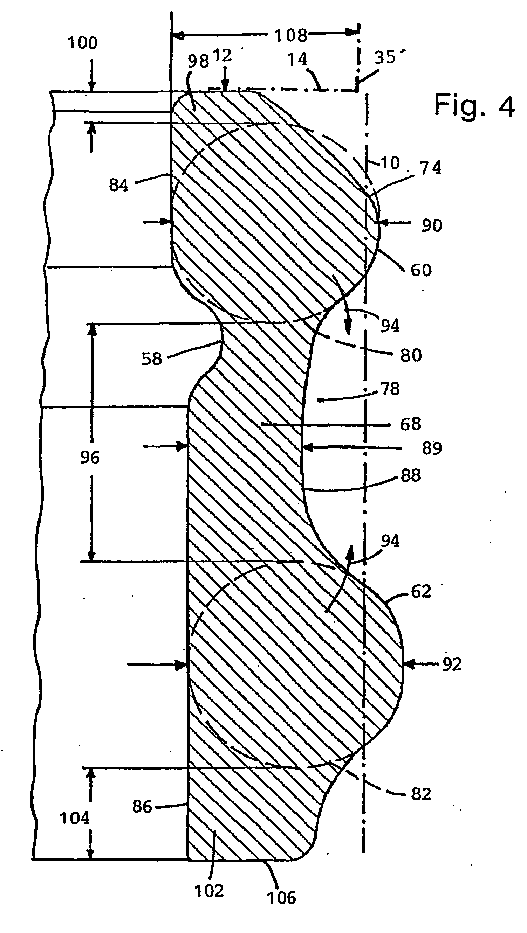

Fig. 4 zeigt vergrößert in einer axialen Schnittebene teilweise das Dichtelement 12 mit dem ersten vorderen Dichtwulst 60 und dem zweiten axial beabstandet angeordneten Dichtwulst 62. Es sei festgehalten, dass das Dichtelement 12 und somit die Dichtwülste 60, 62 ringförmig bzw. als Toroid ausgebildet sind und im wesentlichen koaxial zur Längsachse der Steckkupplung angeordnet sind. In der axialen Schnittebene liegen die beiden Dichtwülste 60, 62 zumindest näherungsweise auf Kreisen 80, 82, welche mit gestrichelten Linien dargestellt sind. Ferner sei darauf hingewiesen, dass bezogen auf die Längsachse in Umfangsrichtung die Querschnittsflächen, welche in axialen Längsebenen liegen, übereinstimmend und / oder gleich groß ausgebildet sind. Das Dichtelement 12 enthält eine erste zylindrische Innenfläche 84 und eine zweite zylindrische Innenfläche 86, welche zumindest näherungsweise tangential zu den genannten Kreisen 80 bzw. 82 verlaufen. Die Kreise 80, 82 entsprechen zumindest näherungsweise der Außenkontur jeweils eines O-Ringes. Zwischen den beiden Dichtwülsten 60, 62 und / oder den genannten O-Ringen ist der Verbindungsteil 68 des Dichtelements 12 vorhanden. Der Verbindungsteil 68 wird radial innen von der zweiten zylindrischen Innenfläche 86 begrenzt und radial außen von einer zur Längsachse im wesentlichen koaxialen Außenfläche 88, welche von dem bereits erwähnten Verformungsraum 78 umgeben ist. Der radiale Verbindungsteil 68 besitzt eine radiale Dicke 89, welche um einen vorgegeben Betrag kleiner ist als die radialen Dicken 90, 92 des Dichtelements 12 im Bereich der beiden Dichtwülste 60, 62. Die radialen Dicken 90, 92 entsprechen den Durchmessern der erwähnten Kreise 80, 82 und / oder der genannten in das Dichtelement 12 integrierten O-Ringe. Die radialen Dicken 90, 92 bzw. Durchmesser der beiden derart gebildeten O-Ringe sind im wesentlichen gleich groß. Da die radiale Dicke 89 des Verbindungsteils 68 wesentlich kleiner ist als die radiale Dicke 90, 92 im Bereich der beiden Dichtwülste 60, 62 verhält sich das Dichtelement 12 im Bereich der Dichtwülste 60, 62 zumindest näherungsweise wie O-Ringe.

Mittels strichpunktierter Linie ist die Innenfläche 10 des bereits erläuterten Rohrendes angedeutet. Beim Einschieben des Rohrendes ist somit wie bei separaten einzelnen O-Ringen eine Deformation der beiden ringförmigen Dichtwülste 60, 62 gemäß den Pfeilen 94 möglich. Da die Innenfläche des Dichtelements gestuft ausgebildet ist, wobei im Bereich des ersten Dichtwulstes 60 bzw. O-Ringes der Innenradius 64 kleiner ist als der Innenradius 66 im Bereich des zweiten Dichtwulstes 62 bzw. O-Ringes wird beim Einschieben des Rohrteiles der erste Dichtwulst 60 weniger verformt als der zweite Dichtwulst 62, so dass der Einschubwiderstand entsprechend reduziert ist. In zweckmäßiger Weise wird in Kombination mit der erläuterten konischen Schrägfläche 74 der Einschubwiderstand weiter reduziert. In vorteilhafter Weise liegt die radiale Dicke 89 im Bereich zwischen 40 bis 70%, zweckmäßig zwischen 50 und 60% der radialen Dicke 90 und / oder 92 im Bereich der Dichtwülste 60 bzw. 62. Der Verbindungsteil 68 weist, gemessen von der Kreiskontur 80 und der Kreiskontur 82, eine axiale Länge 96 auf, welche zumindest näherungsweise gleich groß ist wie die radiale Dicke 90, 92. Diese axiale Länge 96 ist bevorzugt um einen vorgegeben Betrag größer als die radiale Dicke 90 bzw. 92 der beiden Dichtwülste 60, 62. Insbesondere ist die axiale Länge 96 im Bereich zwischen 100 bis 130%, insbesondere zwischen 110 bis 120%, der radialen Dicke 90 und / oder 92 vorgegeben.

Wie aus der Zeichnung ferner ersichtlich, befindet sich die Ringnut 58, in welche der korrespondierend ausgebildete Haltekörper des Grundkörpers eingreift, im Bereich des Verbindungsteils 68. Die Ringnut 58 liegt erfindungsgemäß außerhalb der Kreiskontur 80 des ersten Dichtwulstes bzw. des entsprechenden O-Ringes, so dass beim Einschieben des Rohrendes, wie im Falle eines separat ausgebildeten O-Ringes, das Dichtelement 12 insgesamt in der erwähnten Ringnut des Grundkörpers festgelegt und gehalten wird. Die Funktionsweise des vorderen Dichtbereiches mit dem ersten radial außen liegenden Dichtwulst 60 entspricht somit unverändert der eines O-Ringes.

Das Dichtelement 12 enthält vor dem Bereich des ersten Dichtwulstes 60 bzw. dem ersten O-Ring entsprechend des Kreises 80 einen vorderen axialen Endteil 98, dessen axiale Länge 100 wesentlich kleiner ist als die radiale Dicke 90. Die axiale Länge 100 liegt im Bereich zwischen 10 bis 40%, bevorzugt zwischen 15 bis 30% der radialen Dicke 90 und beträgt zumindest näherungsweise 20%. Ferner weist das Dichtelement 12 axial anschließend an den Bereich des zweiten Dichtwulstes 62 bzw. den zweiten O-Ring einen hinteren axialen Endteil 102 mit einer axialen Länge 104 auf. Die axiale Länge 104 ist um einen vorgegebenen Betrag und / oder wesentlich kleiner als die radiale Dicke 92 des Bereiches des zweiten Dichtwulstes 62 bzw. des zweiten O-Ringes, und zwar zweckmäßig im Bereich zwischen 30 bis 60%, bevorzugt zwischen 40 bis 50%. Der hintere axiale Endteil 102 besitzt eine Anlage- oder Endfläche 106. Die Endfläche 106 liegt zweckmäßig im wesentlichen in einer Radialebene. Bei Druckbeaufschlagung und / oder beim Einschieben des Rohrendes gelangt die Endfläche 106 zur Anlage an der zugeordneten Wand der Ringnut des Grundkörpers und dient somit als Anschlag.

Mit strichpunktierter Linie sind die vordere Endfläche 14 der genannten Ringnut sowie der radial außenliegende Führungsbereich 35' des Grundkörpers 6 angedeutet. Es ist von besonderer Bedeutung, dass die Ringnut 13 eine Nuttiefe 108 derart aufweist, dass der gekammerte Teil des Dichtelements möglichst groß ist. Der Außendurchmesser des außenliegenden Führungsbereiches 35' des Grundkörpers ist im wesentlichen gleich groß wie der Innendurchmesser des in die Steckkupplung einzuschiebenden Rohrendes. Es ragt somit nur ein vergleichsweise geringer Anteil des Dichtelements aus der Ringnut des Grundkörpers heraus, und die Gefahr des Herausrutschens des Dichtelements beim Einschieben des Rohrendes in die Steckkupplung wird aufgrund der optimierten Kammerung somit minimiert.

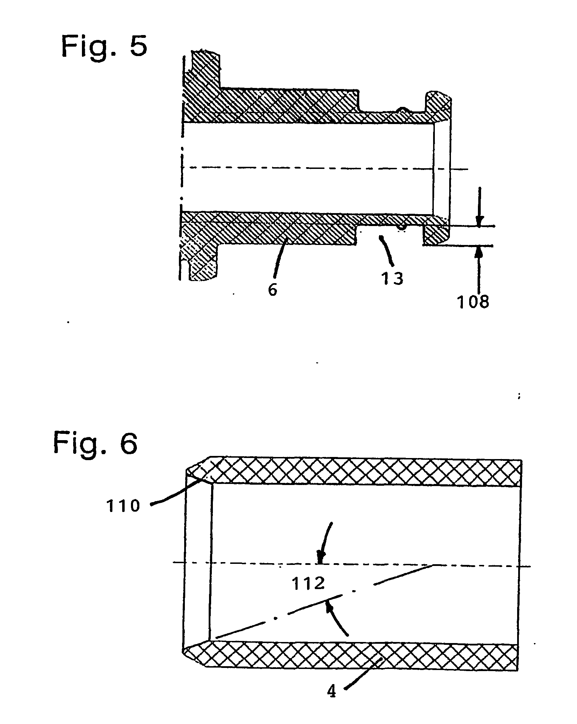

Fig. 5 zeigt einen axialen Längsschnitt des Grundkörpers 6 mit der vergrößerten Ringnut 13, welche die Nuttiefe 108 aufweist.

In Fig. 6 ist eine weitere Ausgestaltung des mit der Steckkupplung zu verbindenden Rohrendes 4 dargestellt. Das Rohrende weist eine innenliegende Phase 110 auf, welche zur Längsachse 18 einen Fasenwinkel 112 besitzt. Dieser Fasenwinkel 112 ist in vorteilhafter Weise im Bereich zwischen 15° bis 35°, insbesondere zwischen 20° bis 30° vorgegeben. Hierdurch werden beim Einschieben des Rohres in die Steckkupplung die in axialer Richtung wirkenden Kräfte auf das Dichtelement verkleinert. Die in Richtung auf den Grund des Ringspaltes zwischen dem Grundkörper und der Hülse gerichteten Kräfte werden vergrößert, und insgesamt ist die Gefahr des Herausschiebens der Dichtung aus der Längsnut des Grundkörpers somit verringert.

### Bezugszeichen

- 2: Mittelebene
- 4,5: Rohrende
- 6: Grundkörper
- 8, 9: Endbereich von 6
- 10, 11: Innenfläche von 4, 5
- 12: Dichtelement
- 13: Ringnut in 6
- 14: vordere Endfläche von 13
- 15: erster Steg / Bund
- 16: vordere Stirnfläche von 15
- 17: Abstand zwischen 14 und 16
- 18: Längsachse
- 20: Ringkörper / Hülse
- 22: Klemmfläche
- 24: vorderes freies Ende von 20
- 26: Verbindungselement
- 28: Ringnut von 26
- 30: Rand von 16
- 31: radiale Erweiterung von 20
- 32: freies Ende von 6
- 33: Ringspalt
- 34: Verlängerung von 20
- 35: innenliegender Führungsbereich von 34
- 35': radial außenliegender Führungsbereich von 37
- 36: Innendurchmesser von 35
- 37: Verlängerung von 6
- 38: Länge von 34 bzw. 35
- 38': Länge von 37 bzw. 35'
- 39: Sichtfenster / transparenter Bereich
- 40: zweiter Steg
- 41: radialer Ansatz
- 42: Ringraum
- 44: Ringnut in 6
- 46: Bereich bei 24
- 48: axiale Länge von 46
- 50: Klemmring
- 52: erste innere Haltekralle von 50
- 54: zweite äußere Haltekralle von 50
- 55: hintere Endfläche von 13
- 56: Hinterschneidung in 13
- 57: Haltekörper
- 58: innere Ringnut von 12
- 60: erster Dichtwulst
- 62: zweiter Dichtwulst
- 64: Innenradius von 60
- 66: Innenradius von 62
- 68: Verbindungsteil
- 70: Außenradius von 60
- 72: Außenradius von 62
- 74: Schrägfläche
- 76: Winkel
- 78: Verformungsraum
- 80,82: Kreis
- 84: erste zylindrische Innenfläche von 12
- 86: zweite zylindrische Innenfläche von 12
- 88: Außenfläche
- 89: radiale Dicke von 68
- 90, 92: radiale Dicke von 60, 62
- 94: Pfeil
- 96: axiale Länge von 68
- 98: vorderer axialer Endteil
- 100: axiale Länge von 98
- 102: hinterer axialer Endteil
- 104: axiale Länge von 100
- 106: Endfläche von 102
- 108: Nuttiefe von 13
- 110: Rohrfase
- 112: Fasenwinkel

## Patentansprüche

1. Steckkupplung, enthaltend einen Grundkörper (6), ein ringförmiges Dichtelement (12), einen Klemmring (50) sowie einen mit dem Grundkörper (6) verbindbaren Ringkörper (20), wobei mittels des Klemmringes (50) ein Rohrende (4, 5), an welchem das Dichtelement (12) dichtend anliegt, in der Steckkupplung festspannbar ist, wobei das in einer Ringnut (13) des Grundkörpers (6) angeordnete Dichtelement (12) zwei Dichtwülste aufweist, welche an der Innenfläche des eingeschobenen Rohrendes (4, 5) anliegen, und wobei die Ringnut (13) des Grundkörpers (6) einen radial nach außen gerichteten Haltekörper (57) aufweist, welcher in eine radial innen angeordnete Ringnut (58) des Dichtelements (12) eingreift,
**dadurch gekennzeichnet, dass** in das ringförmige Dichtelement (12) zwei, einteilig mittels eines Verbindungsteils (68) miteinander verbundene O-Ringe (60, 62) integriert sind, deren radiale Außenflächen die genannten Dichtwülste bilden und deren Querschnittsflächen im wesentlichen kreisförmige Außenkonturen (80, 82) aufweisen, wobei die im wesentlichen zylindrische Innenfläche (84, 86) des Dichtelements (12) zumindest näherungsweise tangential zu den Außenkonturen (80,82) verläuft, und dass die Ringnut (58) des Dichtelements (12) außerhalb der kreisförmigen Außenkontur (80) des ersten O-Ringes (60) im Bereich des Verbindungsteils (68) angeordnet ist.

2. Steckkupplung nach Anspruch 1, **dadurch gekennzeichnet, dass** ein Verformungsraum (78) den Verbindungsteil (68) des Dichtelements (12) umgibt.

3. Steckkupplung nach Anspruch 1 oder 2, **dadurch gekennzeichnet, dass** der Verbindungsteil (68) eine radiale Dicke (89), im Bereich zwischen 40 bis 70%, bevorzugt zwischen 50 bis 60%, der radialen Dicke (90, 92) des ersten und/oder zweiten O-Ringes (60, 62) aufweist.

4. Steckkupplung nach einem der Ansprüche 1 bis 3, **dadurch gekennzeichnet, dass** der Hal-tekörper (57) der Ringnut (13) ringförmig ausgebildet ist.

5. Steckkupplung nach einem der Ansprüche 1 bis 4, **dadurch gekennzeichnet, dass** das Dichtelement (12) axial vor dem ersten O-Ring (60) einen vorderen axialen Endteil (98) aufweist, dessen axiale Länge (100) wesentlich kleiner ist als die radiale Dicke (90) des ersten O-Ringes (60) und / oder dass die axiale Länge (100) im Bereich zwischen 10 bis 40%, bevorzugt zwischen 15 bis 30%, der radialen Dicke (90) groß ist.

6. Steckkupplung nach einem der Ansprüche 1 bis 5, **dadurch gekennzeichnet, dass** axial anschließend an dem zweiten O-Ring (62) ein hinterer axialer Endteil (102) mit einer axialen Länge (104) angeordnet ist und / oder dass die axiale Länge (104) wesentlich kleiner ist als die radiale Dicke (92) des zweiten O-Ringes (62), und zwar bevorzugt zwischen 30 bis 60%, insbesondere zwischen 40 bis 50% der radialen Dicke (92) beträgt.

7. Steckkupplung nach einem der Ansprüche 1 bis 6, **dadurch gekennzeichnet, dass** der Ringkörper (20) und / oder der Grundkörper (6) zum vorderen Ende hin anschließend an das Dichtelement (12) eine Verlängerung (34, 37) mit einem Führungsbereich (35) derart aufweisen, dass das in die Steckkupplung einzuführende Rohrende (4, 5) im wesentlichen koaxial zur Längsachse (18) der Steckkupplung ausrichtbar ist.

8. Steckkupplung nach einem der Ansprüche 1 bis 7, **dadurch gekennzeichnet, dass** das Dichtelement (12) in einer Ringnut (13) mit einer vorderen Endfläche (14) angeordnet ist, welche zu einem Steg (15) und / oder einer Anlage- oder Stirnfläche (16) des Grundkörpers (6) einen vorgegebenen Abstand (17) aufweist, welcher zumindest näherungsweise gleich groß oder größer ist als der Innendurchmesser (36) des innenliegenden Führungsbereiches (35) des Ringkörpers (20), oder welcher Abstand (17) im Bereich zwischen 60 bis 130 %, vorzugsweise zwischen 60 bis 120 %, insbesondere zwischen 70 bis 110%, des genannten Innendurchmessers (36) vorgegeben ist.

9. Steckkupplung nach Anspruch 7 oder 8, **dadurch gekennzeichnet, dass** die Verlängerung (34) und / oder der innenliegende Führungsbereich (35) des Ringkörpers (20) eine vorgegebene axiale Länge (38) aufweist, welche im Bereich zwischen 30 bis 60 %, bevorzugt zwischen 40 bis 60 %, des genannten Innendurchmessers (36) vorgegeben ist.

10. Steckkupplung nach einem der Ansprüche 7 bis 9, **dadurch gekennzeichnet, dass** die Verlängerung (37) und / oder der radial außenliegende Führungsbereich (35') des Grundkörpers (6) eine vorgegebene axiale Länge (38') aufweist, und / oder dass die genannte Länge (38') im Bereich zwischen 30 bis 60 %, bevorzugt zwischen 40 bis 60 %, des genannten Innendurchmessers (36) des Ringkörpers (20) vorgegeben ist.

## Claims

1. Plug-in coupling comprising a base body (6), an annular sealing element (12), a clamping ring (50) and an annular body (20) which can be connected to the base body (6), wherein a pipe end (4, 5) in sealing contact with the sealing element (12) can be fixedly secured in the plug-in coupling by the clamping ring (50), wherein the sealing element (12) which is arranged in an annular groove (13) of the base body (6) comprises two sealing beads which abut the inner surface of the inserted pipe end (4, 5), and wherein the annular groove (13) of the base body (6) comprises a radially outwardly directed holding body (57) which engages in a radially inwardly arranged annular groove (58) of the sealing element (12), **characterised in that** two O-rings (60, 62) connected to each other in one piece by a connecting part (68) are integrated into the annular sealing element (12), the radial outer surfaces of which O-rings form said sealing beads and the sectional surfaces of which substantially comprise circular outer contours (80, 82), wherein the substantially cylindrical inner surface (84, 86) of the sealing element (12) runs at least approximately tangentially to the outer contours (80, 82), and **in that** the annular groove (58) of the sealing element (12) is arranged outside the circular outer contour (80) of the first O-ring (60) in the region of the connecting part (68).

2. Plug-in coupling according to claim 1, **characterised in that** a deformation space (78) surrounds the connecting part (68) of the sealing element (12).

3. Plug-in coupling according to either claim 1 or claim 2, **characterised in that** the connecting part (68) has a radial thickness (89) in the range between 40 and 70 %, preferably between 50 and 60 %, of the radial thickness (90, 92) of the first and/or second O-ring (60, 62).

4. Plug-in coupling according to any one of claims 1 to 3, **characterised in that** the holding body (57) of the annular groove (13) is annular in configuration.

5. Plug-in coupling according to any one of claims 1 to 4, **characterised in that** the sealing element (12) comprises a front axial end part (98) axially in front of the first O-ring (60), the axial length (100) of which end part is substantially smaller than the radial thickness (90) of the first O-ring (60), and/or **in that** the axial length (100) is in the range between 10 and 40 %, preferably between 15 and 30 %, of the radial thickness (50).

6. Plug-in coupling according to any one of claims 1 to 5, **characterised in that** a rear axial end part (102) having an axial length (104) is arranged axially adjacent to the second O-ring (62) and/or **in that** the axial length (104) is substantially smaller than the radial thickness (92) of the second O-ring (62), preferably between 30 and 60 %, in particular between 40 and 50 %, of the radial thickness (92).

7. Plug-in coupling according to any one of claims 1 to 6, **characterised in that** the annular body (20) and/or the base body (6) comprise, toward the front end adjacent to the sealing element (12), an extension (34, 37) having a guide region (35) such that the pipe end (4, 5) to be inserted into the plug-in coupling can be aligned substantially coaxially with the longitudinal axis (18) of the plug-in coupling.

8. Plug-in coupling according to any one of claims 1 to 7, **characterised in that** the sealing element (12) is arranged in an annular groove (13) having a front end face (14) arranged at a predetermined distance (17) from a web (15) and/or a contact face or front face (16) of the base body (6), which distance is at least approximately equal to or larger than the internal diameter (36) of the inner guide region (35) of the annular body (20), or which distance (17) is in the range between 60 and 130 %, preferably between 60 and 120 %, in particular between 70 and 110 %, of said internal diameter (36).

9. Plug-in coupling according to either claim 7 or claim 8, **characterised in that** the extension (34) and/or the inner guide region (35) of the annular body (20) has a predetermined axial length (38), which is in the range between 30 and 60 %, preferably between 40 and 60 %, of said internal diameter (36).

10. Plug-in coupling according to any one of claim 7 to 9, **characterised in that** the extension (37) and/or the radial outer guide region (35') of the base body (6) has a predetermined axial length (38'), and/or **in that** said length (38') is in the range between 30 and 60 %, preferably between 40 and 60 %, of said internal diameter (36) of the annular body (20).

## Revendications

1. Raccord à emmancher comprenant un corps de base (6), un élément d'étanchéité annulaire (12), une bague de blocage (50) ainsi qu'un corps annulaire (20) pouvant être relié au corps de base (6), une extrémité (4, 5) de conduit contre laquelle l'élément d'étanchéité (12) s'appuie hermétiquement pouvant être serrée dans le raccord à emmancher au moyen de la bague de blocage (50), l'élément d'étanchéité (12) placé dans une rainure annulaire (13) du corps de base (6) présentant deux bourrelets d'étanchéité qui s'appuient contre la surface intérieure de l'extrémité (4, 5) de conduit insérée, et la rainure annulaire (13) du corps de base (6) présentant un corps de maintien (57) dirigé radialement vers l'extérieur, qui s'engage dans une rainure annulaire (58) de l'élément d'étanchéité (12) placée radialement à l'intérieur,
***caractérisé en ce que**,* dans l'élément d'étanchéité annulaire (12), sont intégrés deux joints toriques (60, 62) reliés entre eux d'un seul tenant au moyen d'une pièce de jonction (68), joints dont les surfaces extérieures radiales forment lesdits bourrelets d'étanchéité et dont les surfaces de section présentent pour l'essentiel des contours extérieurs (80, 82) circulaires, la surface intérieure (84, 86) pour l'essentiel cylindrique de l'élément d'étanchéité (12) s'étendant au moins approximativement de manière tangentielle aux contours extérieurs (80, 82), et ***en ce que*** la rainure annulaire (58) de l'élément d'étanchéité (12) est placée à l'extérieur du contour extérieur circulaire (80) du premier joint torique (60) au niveau de la pièce de jonction (68).

2. Raccord à emmancher selon la revendication 1, ***caractérisé en ce qu'**un* espace de déformation (78) entoure la pièce de jonction (68) de l'élément d'étanchéité (12).

3. Raccord à emmancher selon la revendication 1 ou 2, ***caractérisé en ce que*** la pièce de jonction (68) présente une épaisseur radiale (89) comprise entre 40 % et 70 %, de manière préférée entre 50 % et 60 %, de l'épaisseur radiale (90, 92) du premier et/ou du deuxième joint torique (60, 62).

4. Raccord à emmancher selon l'une quelconque des revendications 1 à 3, ***caractérisé en ce que*** le corps de maintien (57) de la rainure annulaire (13) est de configuration annulaire.

5. Raccord à emmancher selon l'une quelconque des revendications 1 à 4, ***caractérisé en ce que*** l'élément d'étanchéité (12) présente axialement avant le premier joint torique (60) un élément d'extrémité axial antérieur (98) dont la longueur axiale (100) est nettement plus courte que l'épaisseur radiale (90) du premier joint torique (60) et/ou ***en ce que*** la longueur axiale (100) est comprise entre 10 % et 40 %, de préférence entre 15 % et 30 % de l'épaisseur radiale (90).

6. Raccord à emmancher selon l'une quelconque des revendications 1 à 5, ***caractérisé en ce qu'**à* la suite axialement du deuxième joint torique (62) est placée un élément d'extrémité axial postérieur (102) ayant une longueur axiale (104) et/ou ***en ce que*** la longueur axiale (104) est nettement plus courte que l'épaisseur radiale (92) du deuxième joint torique (62), et vaut de manière préférée entre 30 % et 60 %, en particulier entre 40 % et 50 % de l'épaisseur radiale (92).

7. Raccord à emmancher selon l'une quelconque des revendications 1 à 6, ***caractérisé en ce* *que*** le corps annulaire (20) et/ou le corps de base (6) présentent en direction de l'extrémité antérieure, à la suite de l'élément d'étanchéité (12), un prolongement (34, 37) avec une zone de guidage (35) de telle sorte que l'extrémité de conduit (4, 5) devant être insérée dans le raccord à emmancher puisse être orientée pour l'essentiel de façon coaxiale à l'axe longitudinal (18) du raccord à emmancher.

8. Raccord à emmancher selon l'une quelconque des revendications 1 à 7, ***caractérisé en ce que*** l'élément d'étanchéité (12) est placé dans une rainure annulaire (13) avec une surface d'extrémité antérieure (14) qui présente, par rapport à une barre (15) et/ou à une surface d'appui ou frontale (16) du corps de base (6), une distance (17) prédéterminée qui est au moins approximativement égale ou supérieure au diamètre intérieur (36) de la zone de guidage intérieure (35) du corps annulaire (20), ou laquelle distance (17) est comprise entre 60 % et 130 %, de manière préférée entre 60 % et 120 %, en particulier entre 70 % et 110 % dudit diamètre intérieur (36).

9. Raccord à emmancher selon la revendication 7 ou 8, ***caractérisé en ce que*** le prolongement (34) et/ou la zone de guidage intérieure (35) du corps annulaire (20) présente une longueur axiale prédéterminée (38) qui est égale à entre 30 % et 60 %, de manière préférée à entre 40 % et 60 %, dudit diamètre intérieur (36).

10. Raccord à emmancher selon l'une quelconque des revendications 7 à 9, ***caractérisé en ce que*** le prolongement (37) et/ou la zone de guidage (35') extérieure radialement du corps de base (6) présente une longueur axiale (38') prédéterminée, et/ou ***en ce que*** ladite longueur (38') est égale à entre 30 % et 60 %, de manière préférée à entre 40 % et 60 %, dudit diamètre intérieur (36) du corps annulaire (20).
